# FASCICULE DE BREVET EUROPEEN

(11) **EP 3 438 764 B1**
(45) Date de publication et mention de la délivrance du brevet: **26.11.2025**
(21) Numéro de dépôt: 17184981.3
(22) Date de dépôt: 04.08.2017
(51) Int. Cl.: G04C 3/00, G04C 3/14

(54) **MOUVEMENT HORLOGER COMPORTANT UN DISPOSITIF DE DÉTECTION D'UNE POSITION ANGULAIRE D'UNE ROUE**
UHRWERK, DAS EINE VORRICHTUNG ZUR ERFASSUNG DER WINKELPOSITION EINES RADS UMFASST
CLOCK MOVEMENT COMPRISING A DEVICE FOR DETECTING AN ANGULAR POSITION OF A WHEEL

(43) Date de publication de la demande: 06.02.2019
(73) Titulaire: ETA SA Manufacture Horlogère Suisse, 2540 Grenchen (CH)
(72) Inventeur: RUFENER, René, 2504 Bienne (CH)
(74) Mandataire: ICB SA

(56) Documents cités:
- EP-A1- 3 037 899
- CH-A2- 710 522

## Description

### Domaine technique

L'invention se rapporte au domaine des mouvements horlogers pourvus d'un affichage analogique et d'au moins une roue solidaire en rotation d'un indicateur rotatif de cet affichage analogique. L'invention se rapporte plus particulièrement aux dispositifs de détection de la position angulaire d'une telle roue, dans le but de déterminer la position angulaire de l'indicateur rotatif.

### Art antérieur

On connait des dispositifs de détection d'au moins une position angulaire d'une roue appartenant à un mouvement de montre, tels que les documents EP3037899 et CH710522. En particulier, on connait de la demande EP15202349.5 un dispositif de détection, dont une partie est schématiquement illustrée à la figure 1. Le dispositif comprend une plaque PA de circuit imprimé, fixe par rapport à la platine du mouvement, et agencée parallèlement à la roue MB. La plaque PA comprend trois électrodes planes, appelées première électrode E1, deuxième électrode E2 et électrode commune Em. Les électrodes ont la forme de secteurs d'un même anneau, l'électrode commune Em étant placée entre la première électrode E1 et la deuxième électrode E2. La roue MB, quant à elle, comporte un plateau PT électriquement conducteur percé d'une ouverture OV. L'ouverture OV est agencée de sorte à pouvoir successivement se trouver, lorsque la roue MB effectue une rotation, en vis-à-vis de la première électrode E1 seulement, puis de la première électrode E1 et de l'électrode commune Em, puis des trois électrodes, puis de l'électrode commune Em et de la deuxième électrode E2, et enfin de la deuxième électrode E2 seulement.

Le dispositif de détection comporte en outre un circuit électronique permettant d'imposer des potentiels à la première électrode E1, la deuxième électrode E2 et l'électrode commune Em. Selon ce circuit, des tensions en créneaux sont appliquées à la première électrode E1 et à la deuxième électrode E2 de sorte à charger alternativement la première électrode E1 et la deuxième électrode E2 : la première électrode E1 est maintenue à un potentiel haut tandis que la deuxième électrode est maintenue à un potentiel bas, puis inversement. L'électrode commune Em est quant à elle maintenue à un potentiel intermédiaire qui est avantageusement la moyenne du potentiel haut et du potentiel bas.

Etant donné que la première électrode E1 et l'électrode commune Em comportent des bords latéraux proches et en regard l'un de l'autre, qu'elles sont à des potentiels différents et que le potentiel de la première électrode E1 est variable, un couplage capacitif s'effectue entre ces deux électrodes : on nomme première capacité C1, la capacité entre ces deux électrodes. De même, étant donné que la deuxième électrode E2 et l'électrode commune Em comportent des bords latéraux proches et en regard l'un de l'autre, qu'elles sont à des potentiels différents et que le potentiel de la deuxième électrode est variable, un couplage capacitif s'effectue entre ces deux électrodes : on nomme deuxième capacité C2, la capacité entre ces deux électrodes.

Ces capacités C1, C2 voient leurs valeurs varier en fonction de la position de l'ouverture OV de la roue : lorsque l'ouverture OV est simultanément au-dessus de la première électrode E1 et l'électrode commune Em, la première capacité C1 est maximale puisque la roue ne coupe aucune ligne de champ électrique entre la première électrode E1 et l'électrode commune Em. De même, lorsque l'ouverture est simultanément au-dessus de la deuxième électrode E2 et l'électrode commune Em, la deuxième capacité C2 est maximale puisque la roue ne coupe aucune ligne de champ électrique entre la deuxième électrode E2 et l'électrode commune Em.

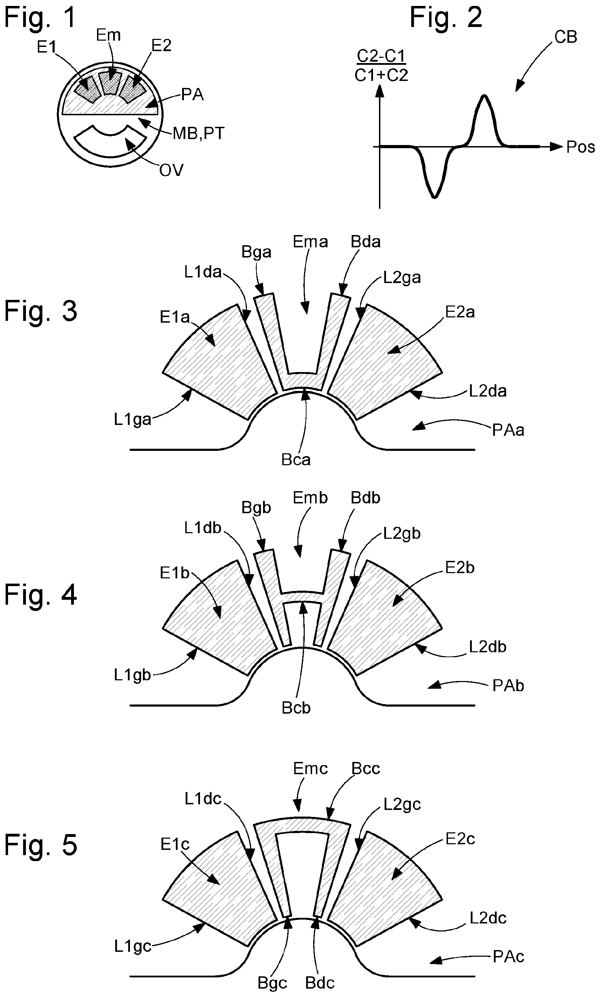

Le circuit électronique comporte en outre un montage électronique connecté à l'électrode commune Em. Le montage électronique permet de mesurer (C2-C1)/(C1+C2) en fonction de la position de l'ouverture, lorsque que la roue MB effectue une rotation. Une courbe obtenue à partir de ces mesures par interpolation linéaire, est illustrée à la figure 2. Comme cela a été expliqué précédemment, cette courbe atteint un minimum lorsque la première électrode E1 et l'électrode commune Em uniquement sont intégralement en vis-à-vis de l'ouverture OV, et un maximum lorsque l'électrode commune Em et la deuxième électrode E2 seulement sont intégralement en vis-à-vis de l'ouverture OV.

Pour éviter un couplage capacitif entre le plateau PT de la roue MB et l'électrode commune Em, qui perturberait les mesures, le plateau PT est maintenu à un potentiel fixe, avantageusement un potentiel nul, appliqué au plateau PT via l'arbre de la roue. Toutefois, lorsque la montre est portée, des chocs ou des mouvements brusques peuvent être à l'origine de mauvais contacts électriques, et le potentiel de l'arbre et par conséquent du plateau peuvent alors fluctuer. Cela est à l'origine d'une capacité parasite, formée entre le plateau PT et l'électrode commune Em. Cette capacité parasite varie avec les variations d'ébat de la roue (c'est-à-dire les variations de distance entre l'électrode commune Em et la roue MB).

### Résumé de l'invention

La présente invention vise à réduire le couplage capacitif entre l'électrode commune Em et le plateau PT de la roue MB, sans changer notablement le couplage entre l'électrode commune Em et les électrodes E1 et E2.

A cet effet, l'invention a pour objet un mouvement horloger tel que défini dans la revendication 1.

La forme particulière de l'électrode commune permet de réduire son couplage avec le plateau sans affecter son couplage avec la première électrode et avec la deuxième électrode.

Le couplage entre la première électrode et l'électrode commune se fait entre le bord latéral de la première électrode et la première branche de l'électrode commune, tandis que le couplage entre la deuxième électrode et l'électrode commune se fait entre le bord latéral de la deuxième électrode et la deuxième branche de l'électrode commune. Ces couplages ne dépendent pas de l'épaisseur des branches, mais uniquement de leur longueur de vis-à-vis entre la première et la deuxième électrode, et de la distance qui les sépare. Le couplage de l'électrode commune avec la première électrode et avec la deuxième électrode n'est donc pas affecté. Au contraire, le couplage entre l'électrode commune et le plateau dépend de la surface totale de l'électrode commune, cette surface a donc été minimisée grâce à la forme évidée de l'électrode commune.

Dans un mode de réalisation particulier, le mouvement horloger comporte les caractéristiques définies dans la revendication 2.

Cette configuration est particulièrement avantageuse pour limiter le couplage entre l'électrode commune et un autre élément métallique du mouvement horloger (par exemple une autre roue) qui se trouverait à proximité des extrémités supérieures des branches. En effet, le vis-à-vis entre l'électrode commune et un tel élément métallique est minimisé grâce à l'éloignement maximal entre la portion centrale et l'élément.

Dans un mode de réalisation particulier, le mouvement horloger comporte les caractéristiques définies dans la revendication 3.

Cette configuration est particulièrement avantageuse pour limiter le couplage entre l'électrode commune et l'arbre de la roue. En effet, le vis-à-vis entre l'électrode commune et l'arbre est minimisé la portion centrale est éloignée au maximum de l'élément grâce à l'éloignement maximal entre la portion centrale et l'arbre.

Dans un mode de réalisation particulier, le mouvement horloger comporte les caractéristiques définies dans la revendication 4.

Cette configuration présente les avantages des deux modes de réalisation précédents : elle permet de limiter le couplage entre l'électrode commune et un autre élément métallique du mouvement horloger (par exemple une autre roue) qui se trouverait à proximité des extrémités supérieures des branches, mais également de limiter le couplage entre l'électrode commune et l'arbre de la roue.

Dans un mode de réalisation particulier, le mouvement horloger comporte les caractéristiques définies dans les revendications 5, 6 et/ou 7.

### Brève description des figures

D'autres caractéristiques et avantage de la présente invention apparaîtrons à la lecture de plusieurs formes d'exécutions données uniquement à titre d'exemples non limitatifs et faites en référence aux dessins annexés dans lesquels :
- La figure 1, déjà décrite, représente une roue et une partie d'un dispositif de détection de la position angulaire de la roue selon l'art antérieur, le dispositif de détection comportant une plaque sur laquelle une première électrode, une deuxième électrode et une électrode commune sont disposées
- La figure 2, déjà décrite, représente une courbe montrant (C2-C1)/(C1+C2) en fonction de l'angle de rotation de la roue, où C1 est la capacité entre la première électrode et l'électrode commune, et C2 est la capacité entre la deuxième électrode et l'électrode commune
- La figure 3 représente la première électrode, la deuxième électrode et une électrode commune selon un premier mode de réalisation de l'invention, disposées sur une plaque d'un dispositif de détection de la position angulaire d'une roue
- La figure 4 représente la première électrode, la deuxième électrode et une électrode commune selon un deuxième mode de réalisation de l'invention, disposées sur une plaque d'un dispositif de détection de la position angulaire d'une roue
- La figure 5 représente la première électrode, la deuxième électrode et une électrode commune selon un troisième mode de réalisation de l'invention, disposées sur une plaque d'un dispositif de détection de la position angulaire d'une roue.

### Description détaillée des formes d'exécution

Les figures 3, 4 et 5 illustrent respectivement une plaque PAa selon un premier mode de réalisation de l'invention, une plaque PAb selon un deuxième mode de réalisation de l'invention et une plaque PAc selon un troisième mode de réalisation de l'invention, pour remplacer la plaque PA déjà décrite en référence à l'art antérieur. Dans la suite de la description, le sous-fixe 'x' remplace indifféremment 'a', 'b' ou 'c'.

La plaque PAx comporte une première électrode E1x, une deuxième électrode E2x et une électrode commune Emx, toutes trois planes. La première électrode E1x et la deuxième électrode E2x de la plaque PAx sont de forme semblables à la première électrode E1 et à la deuxième électrode E2 de la plaque PA : elles ont la forme de secteurs d'un même anneau ayant pour centre l'intersection entre la plaque PAx et l'axe de la roue MB. La première électrode E1x, respectivement la deuxième électrode E2x, comporte donc deux bords latéraux L1gx, L1dx, respectivement L2gx, L2dx, s'étendant radialement par rapport à un cercle dont le centre serait l'intersection entre la plaque PAx et l'axe de la roue MB. La première électrode E1x, respectivement la deuxième électrode E2x, comporte également deux bords s'étendant chacun en arc de cercle, et reliant les bords latéraux L1gx, L1dx, respectivement L2gx, L2dx.

L'électrode commune Emx est disposée entre la première électrode E1x et la deuxième électrode E2x. L'électrode commune Emx est constituée de trois portions, plus précisément d'une première branche Bgx, d'une deuxième branche Bdx, et d'une portion centrale Bcx reliant la première branche Bgx et la deuxième branche Bdx. La première branche Bgx et la deuxième branche Bdx s'étendent radialement, par rapport à un cercle dont le centre serait l'intersection entre la plaque PAx et l'axe de la roue MB. La première branche Bgx et la deuxième branche Bdx sont de longueurs sensiblement égales. La première branche Bgx s'étend en regard de la première électrode E1x, et la deuxième branche Bdx s'étend en regard de la deuxième électrode E2x. La portion centrale Bcx s'étend en arc de cercle entre la première branche Bgx et la deuxième branche Bdx.

La capacité C1x entre la première électrode E1x et l'électrode commune Emx dépend de l'écart moyen entre le bord latéral L1dx de la première électrode E1x et le bord de la première branche Bgx de l'électrode commune Emx se trouvant du côté première électrode E1x. La capacité C1x dépend également de la longueur du bord latéral L1dx de la première électrode E1x, qui est également la longueur de la première branche Bgx. Quant à la capacité C2x entre la deuxième électrode E2x et l'électrode commune Emx, elle dépend de l'écart moyen entre le bord latéral L2gx de la deuxième électrode E2x et le bord de la deuxième branche Bdx de l'électrode commune Emx se trouvant du côté deuxième électrode E2x. La capacité C2x dépend également de la longueur du bord latéral L2gx de la deuxième électrode E2x, qui est également la longueur de la deuxième branche Bdx. On note donc que les trois formes de l'électrode commune données en exemple dans cette description, n'ont quasiment pas d'impact sur le couplage entre la première électrode et l'électrode commune d'une part, et entre l'électrode commune et la deuxième électrode d'autre part, par rapport à la forme de l'électrode commune selon l'art antérieur. De plus, la surface de l'électrode commune, dans chacun des trois exemples, est moindre par rapport à la surface de l'électrode commune selon l'art antérieur. Le couplage entre l'électrode commune et la roue est ainsi diminué.

Par ailleurs, dans le premier mode de réalisation, la portion centrale Bc1 relie les extrémités de la première branche Bg1 et de la deuxième branche Bd1 se trouvant le plus près de l'intersection entre la plaque PA1 et l'axe de la roue MB. Dans le deuxième mode de réalisation, la portion centrale Bc2 relie les milieux de la première branche Bg2 et de la deuxième branche Bd2. Dans le troisième mode de réalisation, la portion centrale Bc3 relie les extrémités de la première branche Bg3 et de la deuxième branche Bd3 se trouvant le plus loin de l'intersection entre la plaque PA3 et l'axe de la roue MB. La position de la portion centrale a un impact sur le couplage entre l'électrode commune et l'arbre de la roue d'une part, et d'autre part sur le couplage entre l'électrode commune et un autre élément métallique du mouvement (par exemple une roue ou un arbre) qui se trouverait à proximité des extrémités de la première branche Bg3 et de la deuxième branche Bd3 se trouvant le plus loin de l'intersection entre la plaque PA3 et l'axe de la roue MB. Dans le premier mode de réalisation, le couplage entre l'électrode commune et l'autre élément métallique est minimisé. Dans le troisième mode de réalisation, le couplage entre l'électrode commune et l'arbre de la roue est minimisé. Le deuxième mode de réalisation résulte d'un compromis entre ces deux couplages.

On comprendra que diverses modifications et/ou améliorations et/ou combinaisons évidentes pour l'homme du métier peuvent être apportées aux différentes formes d'exécution de l'invention exposée ci-dessus sans sortir du cadre de l'invention définie par les revendications annexées. Par exemple, la portion centrale Bcx pourrait s'étendre entre des endroits autres que les extrémités ou les milieux des branches Bgx, Bdx. Elle pourrait également ne pas s'étendre en arc de cercle.

Par ailleurs, on note que l'ouverture OV dans le plateau PT de la roue MB pourrait être remplacée par un élément de même géométrie que l'ouverture, fait d'un matériau ayant une permittivité diélectrique différente de celle du reste du plateau PT et différente de celle de l'air. Cela ne change rien au principe de l'invention. Pour généraliser, on appelle donc « élément de localisation » l'ouverture ou un tel élément.

## Revendications

1. Mouvement horloger comprenant :
- un affichage analogique, comportant un indicateur rotatif et une roue (MB) solidaire en rotation dudit indicateur rotatif, ladite roue (MB) comportant un plateau (PT) comprenant un élément de localisation (OV),
- un dispositif de détection d'au moins une position angulaire de l'élément de localisation (OV), comprenant une plaque (PAa, PAb, PAc) fixe par rapport au plateau (PT), s'étendant sensiblement parallèlement au plateau (PT), et sur laquelle sont agencées une première électrode (E1a, E1b, E1c), une deuxième électrode (E2a, E2b, E2c) et une électrode commune (Ema, Emb, Emc) positionnée entre la première électrode (E1a, E1b, E1c) et la deuxième électrode (E2a, E2b, E2c), les électrodes étant planes et étant agencées de sorte que, dans une position angulaire de la roue (MB), l'élément de localisation (OV) se trouve au-dessus d'au moins une portion de chaque électrode, la première électrode (E1a, E1b, E1c) et la deuxième électrode (E2a, E2b, E2c) ayant la forme de deux secteurs d'un anneau centré sur l'intersection entre l'axe de la roue (MB) et la plaque (PAa, PAb, PAc), le dispositif de détection comportant en outre un circuit électronique permettant d'imposer des potentiels aux électrodes (E1, E2, Em),
**caractérisé en ce que** l'électrode commune (Ema, Emb, Emc) comporte deux branches, une première branche (Bga, Bgb, Bgc) s'étendant radialement en regard d'un bord latéral (L1da, L1db, L1dc) de la première électrode (E1a, E1b, E1c), une deuxième branche (Bda, Bdb, Bdc) s'étendant radialement en regard d'un bord latéral (L2ga, L2gb, L2gc) de la deuxième électrode (E1a, E1b, E1c), et une portion centrale (Bca, Bcb, Bcc) reliant les deux branches, radialement s'entendant par rapport à un cercle qui serait centré sur l'intersection entre l'axe de la roue (MB) et la plaque (PAa, PAb, PAc), le dispositif de détection comportant un montage électronique connecté à l'électrode commune (Em), et permettant de mesurer (C2-C1)/(C1+C2) en fonction de la position de l'ouverture, lorsque que la roue MB effectue une rotation, C1 étant la capacité entre la première électrode (E1) et l'électrode commune (Em), C2 étant la capacité entre la deuxième électrode (E1) et l'électrode commune (Em).

2. Mouvement horloger selon la revendication précédente, **caractérisé en ce que** la portion centrale (Bca) s'étend entre les extrémités de la première branche (Bga) et de la deuxième branche (Bgd) les plus proches de l'axe de la roue (MB), dites extrémités inférieures.

3. Mouvement horloger selon la revendication 1, **caractérisé en ce que** la portion centrale (Bcc) s'étend entre les extrémités de la première branche (Bgc) et de la deuxième branche (Bdc) les plus éloignées de l'axe de la roue (MB), dites extrémités supérieures.

4. Mouvement horloger selon la revendication 1, **caractérisé en ce que** la portion centrale (Bcb) s'étend entre les milieux de la première branche (Bgb) et de la deuxième branche (Bdb).

5. Mouvement horloger selon l'une des revendications précédentes, **caractérisé en ce que** la portion centrale (Bca, Bcb, Bcc) a la forme d'un secteur d'un anneau centré sur l'intersection entre l'axe de la roue (MB) et la plaque (PAa, PAb, PAc).

6. Mouvement horloger selon l'une des revendications précédentes, **caractérisé en ce que** l'élément de localisation (OV) est une ouverture traversant le plateau (PT) de la roue (MB).

7. Mouvement horloger selon l'une des revendications précédentes, **caractérisé en ce que** l'élément de localisation (OV) est fait d'un matériau dont la permittivité diélectrique est différente de celle du reste du plateau (PT) et de l'air.

## Patentansprüche

1. Uhrentechnik-Uhrwerk, aufweisend:
- eine analoge Anzeige, aufweisend eine Drehanzeige und ein Rad (MB), das drehbar an der Drehanzeige befestigt ist, wobei das Rad (MB) eine Scheibe (PT) mit einem Lokalisierungselement (OV) aufweist,
- eine Vorrichtung für ein Erkennen mindestens einer Winkelposition des Lokalisierungselements (OV), umfassend eine Platte (PAa, PAb, PAc), die in Bezug auf die Scheibe (PT) befestigt ist und im Wesentlichen parallel zu der Scheibe (PT) verläuft, und auf der eine erste Elektrode (E1a, E1b, E1c), eine zweite Elektrode (E2a, E2b, E2c) und eine gemeinsame Elektrode (Ema, Emb, Emc) angeordnet sind, die zwischen der ersten Elektrode (E1a, E1b, E1c) und der zweiten Elektrode (E2a, E2b, E2c) positioniert ist, wobei die Elektroden planar und derart angeordnet sind, dass das Lokalisierungselement (OV) in einer Winkelposition des Rads (MB) über mindestens einem Abschnitt von jeder Elektrode angeordnet ist, die erste Elektrode (E1a, E1b, E1c) und die zweite Elektrode (E2a, E2b, E2c) die Form von zwei Segmenten eines Bogens aufweisen, der auf den Schnittpunkt zwischen der Achse des Rades (MB) und der Platte (PAa, PAb, PAc) zentriert ist, wobei die Erkennungsvorrichtung ferner eine elektronische Schaltung für ein Anlegen von Potenzialen an die Elektroden (E1, E2, Em) aufweist,
**dadurch gekennzeichnet, dass** die gemeinsame Elektrode (Ema, Emb, Emc) zwei Arme aufweist, einen ersten Arm (Bga, Bgb, Bgc), der sich radial gegenüber einer Seitenkante (L1da, L1db, L1dc) der ersten Elektrode (E1a, E1b, E1c) erstreckt, einen zweiten Arm (Bda, Bdb, Bdc), der sich radial gegenüber einer Seitenkante (L2ga, L2gb, L2gc) der zweiten Elektrode (E1a, E1b, E1c) erstreckt, und einen mittleren Abschnitt (Bca, Bcb, Bcc), der die zwei Arme verbindet und sich in Bezug auf einen Kreis, der auf den Schnittpunkt zwischen der Achse des Rades (MB) und der Platte (PAa, PAb, PAc) zentriert ist, radial erstreckt, wobei die Erfassungsvorrichtung eine elektronische Schaltung aufweist, die mit der gemeinsamen Elektrode (Em) verbunden ist und es ermöglicht, (C2-C1)/(C1+C2) entsprechend der Position der Öffnung zu messen, wenn sich das Rad MB dreht, wobei C1 die Kapazität zwischen der ersten Elektrode (E1) und der gemeinsamen Elektrode (Em) ist, C2 die Kapazität zwischen der zweiten Elektrode (E1) und der gemeinsamen Elektrode (Em) ist.

2. Uhrentechnik-Uhrwerk nach dem vorhergehenden Anspruch, **dadurch gekennzeichnet, dass** der mittlere Abschnitt (Bca) zwischen den Enden des ersten Arms (Bga) und des zweiten Arms (Bgd) verläuft, die der Achse des Rades (MB) am nächsten liegen und als untere Enden bezeichnet werden.

3. Uhrentechnik-Uhrwerk nach Anspruch 1, **dadurch gekennzeichnet, dass** der mittlere Abschnitt (Bcc) zwischen den Enden des ersten Arms (Bgc) und des zweiten Arms (Bdc) verläuft, die am weitesten von der Achse des Rades (MB) entfernt sind und als obere Enden bezeichnet werden.

4. Uhrentechnik-Uhrwerk nach Anspruch 1, **dadurch gekennzeichnet, dass** der mittlere Abschnitt (Bcb) zwischen den Mittelpunkten des ersten Arms (Bgb) und des zweiten Arms (Bdb) verläuft.

5. Uhrentechnik-Uhrwerk nach einem der vorhergehenden Ansprüche, **dadurch gekennzeichnet, dass** der zentrale Abschnitt (Bca, Bcb, Bcc) die Form eines Segmentes eines Bogens aufweist, der auf den Schnittpunkt zwischen der Achse des Rades (MB) und der Platte (PAa, PAb, PAc) zentriert ist.

6. Uhrentechnik-Uhrwerk nach einem der vorhergehenden Ansprüche, **dadurch gekennzeichnet, dass** das Lokalisierungselement (OV) eine durchgehende Öffnung in der Scheibe (PT) des Rades (MB) ist.

7. Uhrentechnik-Uhrwerk nach einem der vorhergehenden Ansprüche, **dadurch gekennzeichnet, dass** das Lokalisierungselement (OV) aus einem Material mit einer anderen dielektrischen Permittivität als der Rest der Scheibe (PT) und der Luft hergestellt ist.

## Claims

1. A horology movement comprising:
- an analogue display, comprising a rotary indicator and a wheel (MB) rotationally fastened to said rotary indicator, said wheel (MB) comprising a disc (PT) comprising a localisation element (OV),
- a device for detecting at least one angular position of the localisation element (OV), comprising a plate (PAa, PAb, PAc) that is fixed relative to the disc (PT), running substantially parallel to the disc (PT), and on which are arranged a first electrode (E1a, E1b, E1c), a second electrode (E2a, E2b, E2c) and a common electrode (Ema, Emb, Emc) positioned between the first electrode (E1a, E1b, E1c) and the second electrode (E2a, E2b, E2c), the electrodes being planar and being arranged such that, in an angular position of the wheel (MB), the localisation element (OV) is located above at least a portion of each electrode, the first electrode (E1a, E1b, E1c) and the second electrode (E2a, E2b, E2c) is in the shape of two segments of a bow centred on the intersection between the axis of the wheel (MB) and the plate (PAa, PAb, PAc), the detection device further comprising an electronic circuit for imposing potentials on the electrodes (E1, E2, Em),
**characterised in that** the common electrode (Ema, Emb, Emc) comprises two arms, a first arm (Bga, Bgb, Bgc) extending radially facing a lateral edge (L1da, L1db, L1dc) of the first electrode (E1a, E1b, E1c), a second arm (Bda, Bdb, Bdc) extending radially facing a lateral edge (L2ga, L2gb, L2gc) of the second electrode (E1a, E1b, E1c), and a central portion (Bca, Bcb, Bcc) connecting the two arms, extending radially relative to a circle which is centred on the intersection between the axis of the wheel (MB) and the plate (PAa, PAb, PAc), the detection device comprising an electronic circuit connected to the common electrode (Em), and making it possible to measure (C2-C1)/(C1+C2) according to the position of the opening, when the wheel MB rotates, C1 being the capacitance between the first electrode (E1) and the common electrode (Em), C2 being the capacitance between the second electrode (E1) and the common electrode (Em).

2. The horology movement according to the preceding claim, **characterised in that** the central portion (Bca) runs between the ends of the first arm (Bga) and of the second arm (Bgd) closest to the axis of the wheel (MB), referred to as lower ends.

3. The horology movement according to claim 1, **characterised in that** the central portion (Bcc) runs between the ends of the first arm (Bgc) and of the second arm (Bdc) furthest away from the axis of the wheel (MB), referred to as upper ends.

4. The horology movement according to claim 1, **characterised in that** the central portion (Bcb) runs between the mid-points of the first arm (Bgb) and of the second arm (Bdb).

5. The horology movement according to any of the preceding claims, **characterised in that** the central portion (Bca, Bcb, Bcc) is in the shape of a segment of a bow centred on the intersection between the axis of the wheel (MB) and the plate (PAa, PAb, PAc).

6. The horology movement according to any of the preceding claims, **characterised in that** the localisation element (OV) is a through opening in the disc (PT) of the wheel (MB).

7. The horology movement according to any of the preceding claims, **characterised in that** the localisation element (OV) is made of a material with a dielectric permittivity different from that of the rest of the disc (PT) and of air.
